# EUROPEAN PATENT APPLICATION

(11) **EP 4 438 895 A1**
(43) Date of publication of application: **02.10.2024**
(21) Application number: 23165776.8
(22) Date of filing: 31.03.2023
(51) Int. Cl.: F03D 80/80, F03D 13/25, H02G 1/10, B63B 21/00

(54) **FLOATING OFFSHORE STRUCTURE AND METHOD FOR OPERATING A FLOATING OFFSHORE STRUCTURE**

(71) Applicant: Siemens Gamesa Renewable Energy A/S, 7330 Brande (DK)
(72) Inventor: Soerensen, Johnny, 6920 Videbaek (DK)
(74) Representative: SGRE-Association

(57) **Abstract**

An aspect of the present invention relates to a floating offshore structure (100), comprising a floating foundation (2) and at least one electrical system (1), in particular a wind turbine (1), mounted thereon, wherein the electrical system (1) is directly or indirectly electrically connected to an electrical cable assembly (3), that is suspended from the floating foundation (2) and, in an intended state of use, follows an underwater trajectory towards a seabed (5). The floating offshore structure (100) comprises a cable release system (7) adapted to release the suspension of the electrical cable assembly (3) from the floating foundation (2) based on an activation signal.

The floating offshore structure (100) according to the invention allows for an easier restoration of the electrical cable assembly (3), for example after a mooring system failure.

## Description

The present invention relates to a floating offshore structure, in particular to a floating wind turbine, and to a method for operating the floating offshore structure.

With the progressing expansion of offshore wind energy production capacity, wind farms comprising a multitude of wind turbines are being installed in more and more remote offshore regions with relatively large water depths. Each wind turbine of a wind farm is mounted on a foundation that is able to carry the weight of the wind turbine and withstand the forces occurring during operation while keeping the wind turbine at its designated position within the wind farm.

While coastal and/or near coast offshore wind farms use conventional support structures fixed to the seabed, for example gravity foundations, monopole foundations, tripod foundations or jacket foundations, remote offshore applications require floating foundations for the wind turbines as conventional foundations are no longer technically and/or economically viable at water depths beyond approximately 40 m. Typical floating foundations, for example spar type, tension leg platform (TLP) type or jacket type foundations, include at least one buoyancy body and can be fully or partly submerged below sea level.

While conventional foundations are stationary with respect to the seabed, floating foundations are only secured to the seabed by means of a mooring system comprising one more mooring lines so that they - to a certain extent - follow the motion of the swells and waves of the surrounding sea.

Each wind turbine is connected by means of a cable link comprising one or more electrical cables, e.g. power cables and communication cables, to neighboring wind turbines and/or other offshore facilities, for example an electrical switchgear, a substation, a collector unit and/or a compensation unit, and/or an onshore station.

From the floating foundation, respectively from the wind turbine mounted thereon, the cable link is suspended from a platform usually referred to as a "transition piece" at the base of the wind turbine tower and extends below the sea level towards to the seabed where it typically rests. As the water depths in areas in that wind farms with floating foundations are to be used can reach several hundred meters or even 1000 m the cable length between the suspension point at the transition piece and the seabed is significant.

For a simplified installation and/or to provide additional protection to the cables of the cable link the cables may be housed in tubes. This is for example described in EP 3086424 A1 that discloses a method for offshore installing of power cables for wind turbines, wherein the power cables are installed by use of empty tubes between several offshore positions, e.g. between wind turbine foundations. Initially, an empty tube is laid in a trench formed in the seabed and then the empty tube is cut at or near the offshore positions. Afterwards the power cables are inserted into the empty tubes.

During operation under harsh maritime conditions the cable link is under the influence of high loads and has to compensate the allowed movement of the floating foundation, e.g. 50 m in each direction.

Although mooring systems are designed quite robust and may be provided with certain redundancies it cannot always be reliably avoided that, especially under stormy conditions, the mooring system fails, e.g. that one or multiple mooring lines snap and/or that the anchoring of the mooring lines at the seabed is impaired.

While current floating wind turbine installations still rely on a high degree of redundancy in the mooring system, the ambitious expansion targets for offshore wind production capacity in many regions of the world are likely to render this high degree of redundancy unreasonable in the future.

In case the mooring system fails, the floating foundation will move away from its intended position so that the tension on the cable link increases until it ruptures uncontrolledly. Such uncontrolled rupture may extend over a significant longitudinal extension of the cable link so that a repair or a replacement of the damaged sections of the cable link is time consuming and expensive.

Therefore it is one object of the present invention to provide a floating offshore structure, in particular a floating wind turbine, and a method for operating the floating offshore structure that allows for an easier restoration of the cable connection after a mooring system failure.

According to a first aspect of the invention, a floating offshore structure comprising a floating foundation and at least one electrical system mounted thereon is proposed. The electrical system is directly or indirectly electrically connected to an electrical cable assembly that is suspended from the floating foundation and, in an intended state of use, follows an underwater trajectory towards a seabed. The floating offshore structure comprises a cable release system adapted to release the suspension of the electrical cable assembly from the floating foundation based on an activation signal.

It is in particular possible that the activation signal is generated before the tension on the electrical cable assembly becomes too high in order to prevent its uncontrolled rupture.

Upon activation, the cable release system releases or separates the connection of the electrical cable assembly to the floating foundation in a controlled manner so that later repairs of the cable are significantly facilitated.

After release of the electrical cable assembly by the cable release system the electrical cable assembly will have two free ends, a first free end still attached to the floating foundation and a second free end that has been released to the sea. A potential repair includes re-connecting those two free ends back together which can be, for example, done by a remotely operated underwater vehicle (ROV), wherein the ROV can be in particular operated from a vessel with a dynamic positioning system, e.g. a DP2 or DP3 system.

As the two free ends of the electrical cable assembly after release/separation are "clean" ends that in particular do not show any signs of rupture along their longitudinal extension the application of a connection piece and/or splicing them back together is possible without any major obstacles with well-established cable connection methods.

"Towards the seabed" herein does not mean that the electrical cable assembly has to extend all the way down to the seabed but only implies that the electrical cable assembly extends with a downward component with respect to a direction of gravity into the sea.

The invention is explicitly not limited to floating wind turbines but covers other electrical and or electro-mechanical systems mounted on floating foundations as well, for example electrical switchgear, electrical substations or drilling machinery.

The floating foundation may in particular carry a workload platform on that the electrical system, for example a tower of a wind turbine, can be installed. At the base of the wind turbine tower the workload platform may comprise a transition piece from that the electrical cable assembly can be suspended to follow its trajectory towards the seabed.

The floating foundation can be, according to non-limiting examples, of the spar type, tension leg platform (TLP) type or jacket type. The invention however explicitly covers other types of floating foundations as well that - in the context of the present invention - may seem appropriate to the skilled person.

The floating offshore structure according to the invention is in particular provided in a state in that the floating foundation is at least partly submerged below sea level.

The electrical cable assembly may comprise at least one electrical cable, for example a power cable and/or communication cable. In embodiments the electrical cable assembly may comprise more than one cable, wherein in particular multiple electrical cables can be received in a common cladding tube. In the latter case it is in particular possible that the entity of cladding tube and multiple electrical cables is releasable by the cable release system.

According to a further embodiment the activation signal is generatable based on at least one operational parameter of the floating offshore structure, in particular of the electrical system, in particular of the wind turbine, mounted on the floating foundation. In particular the floating offshore structure may comprise a processing unit that is adapted to process the at least one operational parameter based on predefined criteria and to generate the activation signal.

Floating offshore structures, in particular their floating foundations and/or electrical systems like wind turbines mounted thereon, typically comprise a monitoring system that constantly acquires a multitude of operational parameters and checks them against target values. Deviations from the target values in one or more of the operational parameters imply a system malfunction, wherein certain of the operational parameters can imply a failure of the mooring system. In this sense, the floating offshore structure according to this embodiment of the invention is adapted to analyze one or more of the operational parameters in order to detect a failure or impending failure of the mooring system.

The information about the one or more of the operational parameters may be provided by the monitoring system and/or by separate sensors and/or other data sources and is processed based on specific criteria in order to determine if the mooring system has failed or failure is impending so that the activation signal can be generated.

The processing of the one or more of the operational parameters based on said specific criteria can be in particular done by a processing unit that may be based on the floating offshore structure or by a remote processing unit that can be connected over a bi-directional data connection to the monitoring system. The processing unit may in particular comprise a computer.

The processing unit that processes the one or more operational parameters may in particular be a wind turbine controller, i.e. a device that controls the operation of the wind turbine, for example parameters like azimuth and/or pitch angle, electrical parameters of the generator and/or gearbox, rotor speed, power delivery to the grid.

According to yet a further embodiment the offshore structure may comprise a mooring system with one or more mooring lines that secure the floating foundation to the seabed, wherein in particular the mooring system comprises a mooring monitoring system.

The mooring lines extend from the floating foundation to the seabed where they are fixed by means of suitable anchors, e.g. suction anchors, gravity anchors and/or clump weights. Typical mooring lines may include wires, ropes and/or chains.

A mooring monitoring system is a system that directly or indirectly gathers information indicative for a condition of the mooring system, in particular of its mooring lines and/or anchors. The mooring monitoring system may in particular comprise one or more sensors that measure a tension acting on the mooring lines. The sensors may be provided as load cells and can be - for example - installed at the floating foundation at connection points of the mooring lines. Additionally or alternatively it is possible that the mooring monitoring system comprises position sensors that are adapted to gather information indicative for a displacement of one or more of the anchors at the seabed.

In yet another embodiment the operational parameter may comprise a position information of the floating foundation and/or the electrical system, in particular the wind turbine.

The position information may be gathered by a satellite based positioning system such as GPS. The position information may be in particular analyzed for deviations from a target position of the floating foundation and/or the electrical system, in particular the wind turbine, wherein an inadmissible deviation from the target position can be indicative for a failure of the mooring system. In other words, the evaluation of the position information allows to implement "geofencing", wherein marginal deviations from the target position may be considered admissible and only a deviation exceeding the marginal deviation may be considered an inadmissible deviation.

Additionally or alternatively the operational parameter may comprise an angle information of the floating foundation and/or the electrical system, in particular the wind turbine, mounted thereon, in particular about an azimuth angle differential and/or an angle differential with respect to a pitch and/or roll angle.

The angle information may be in particular analyzed for deviations from allowed values, wherein an inadmissible deviation from the allowed values can be indicative for a failure of the mooring system. For example, a certain marginal angle differential that occurs due to the sea's currents and wind loads can be considered an acceptable angle differential and only an angle differential exceeding the marginal angle differential may be considered an inadmissible deviation.

For example, considering an azimuth angle of the wind turbine, a deviation of above 6-10° from a target value may be considered an inadmissible deviation.

Additionally or alternatively the operational parameter may comprise an acceleration information of the floating foundation and/or the electrical system, in particular the wind turbine.

The acceleration information may be in particular analyzed for deviations from allowed values, wherein an inadmissible deviation from the allowed values can be indicative for a failure of the mooring system. For example, certain marginal acceleration values that occur due to the sea's currents and wind loads can be considered acceptable acceleration values and an acceleration exceeding the marginal acceleration values may be considered an inadmissible deviation.

The floating offshore structure may comprise one or more sensors adapted to gather position information, angle information and/or acceleration information. In case the electrical system is a wind turbine, one or more of the sensors may be in particular installed at the wind turbine, in particular in the nacelle. Thus, the measurements of the sensors may relate to a position and/or angle and/or acceleration at the nacelle itself, which is advantageous since target parameters respectively allowed value ranges are typically known for the nacelle from the wind turbine controller so that an evaluation for inadmissible deviations is easily possible.

Due to the nacelle's installation on top of the tower that has a significant length any deviations from the target values/allowed values are clearly detectable at the nacelle, which especially applies for acceleration values that are relatively higher at the nacelle than on the floating foundation.

Additionally or alternatively the operational parameter may comprise a load information of the mooring monitoring system.

According to a further embodiment the cable release system may comprise a cutting device. The cutting device may in particular comprise at least one blade adapted to cut at least partly through a cross section of the electrical cable assembly upon activation of the cable release system.

In embodiments the cutting device may comprise a hydraulic, pneumatic and/or electrical drive system that is operationally coupled to the at least one blade and adapted to transfer a cutting force to the blade upon activation of the cable release system. According to this embodiment of the invention, the cable assembly is destructively separated by the cable release system. The destructive separation induced by the cutting device however is not an uncontrolled separation but creates clean cutting edges so that later repair or replacement of the cable assembly is significantly easier than after an uncontrolled rupture.

According to another embodiment the cable release system may comprise at least one unplugging device. The unplugging device may in particular comprise a plug connection adapted to be disconnected upon activation of the cable release system.

The plug connection of the unplugging device may in particular comprise two plugs connected together in a normal state of operation. A first plug may be arranged at a portion of the electrical cable assembly that is suspended from the floating foundation and a second plug may be arranged at a portion of the electrical cable assembly that extends towards the seabed. Upon activation of the cable release system the two plugs are automatically separated, wherein the second plug may sink towards the seabed together with the respective portion of the electrical cable assembly. According to this embodiment of the invention, the cable assembly is nondestructively separated by the cable release system, making subsequent repair even easier.

According to another embodiment the floating offshore structure may comprise at least one electrical switch gear unit directly or indirectly fixed to the floating foundation and electrically connected to the at least one electrical system, wherein the electrical cable assembly is electrically terminated at the electrical switch gear unit. An electrical switchgear unit is an important component for offshore wind turbines in practice and is adapted to protect the wind turbine against overloads and/or short-circuits and makes it possible to supply electricity to the grid reliably and without interruption. The electrical switch gear unit may in particular be installed at the base of the wind turbine tower, more specifically close to the transition piece.

In embodiments it may be beneficial that a power transmission through the electrical cable assembly is interrupted before the cable release system is activated, wherein the interruption can in particular be done by the electrical switch gear unit.

Moreover, according to a further embodiment the cable release system may be directly or indirectly fixed to the floating foundation, in particular below the electrical switch gear unit with respect to a direction of gravity in the intended state of use. This specific installation position of the cable release system makes it possible that the connection of the electrical cable assembly to the electrical switch gear unit is not affected when the cable release system is activated.

According to a further embodiment the underwater trajectory that the electrical cable assembly follows may comprise a compensation portion with a lying S-shape with respect to the direction of gravity in the intended state of use.

The compensation portion with the lying S-shape provides an excess length of the electrical cable assembly that allows the floating foundation to freely move along with the sea's currents and, for example, may provide a range of motion of up to 50m in each direction. An additional beneficial effect of said excess length is that a re-connection of free ends of the cable assembly is facilitated after the cable release system has been activated.

The compensation portion may, in embodiments, comprise more than one lying 'S' so that the range of motion can be further extended.

More specifically, the lying S-shape of the compensation portion may comprise a first bend and a second bend neighboring each other, wherein the first and the second bend have a different bending direction. In particular, along the first bend the electrical cable assembly may be subject to an uplift and along the second bend the electrical cable assembly may be subject to a downforce.

In other words, a combination of the first and second bend of the underwater trajectory that neighbor each other creates the lying S-shape of the compensation portion. A vertical extension of the lying S-shape of the compensation portion may range from 15 to 25 m.

A bending radius of the first and/or second bend may range between 3 to 8 m, in particular around 5 m.

Further, the underwater trajectory may comprise at least one riser portion in that the trajectory extends with a vertical component or essentially vertical, wherein in particular the compensation portion may neighbor the at least one riser portion.

The first bend may in particular be bent towards the seabed and may define a local maximum of the underwater trajectory, wherein an uplift generating means may be arranged at the electrical cable assembly in the region of the first bend that helps to create and keep this local maximum stable when immersed in sea water in the intended state of use. The bending angle of the first bend may be between 30 and 100°, in particular around 90°. The uplift generating means may in particular comprise at least one buoyancy body attached to the electrical cable assembly and/or any other means that is adapted to provide a buoyancy to the first bend

The second bend may in particular be bent away from the seabed and may define a local minimum of the underwater trajectory, wherein a downforce generating means may be arranged at the electrical cable assembly in the region of the second bend that helps to create and keep this local minimum stable when immersed in sea water in the intended state of use. The bending angle of the second bend may be between 30 and 100°, in particular around 90°. The downforce generating means may in particular comprise at least one weight attached to the electrical cable assembly and/or any other means that is adapted to provide a downforce to the second bend

In addition it is possible that the underwater trajectory comprises a straight section between the two bends of the compensation portion that connects the first with the second bend. Said straight section may in particular extend with a vertical component, in particular essentially vertically, with respect to the direction of gravity in the intended state of use.

According to a further embodiment the electrical cable assembly may comprise a dynamic cable portion and a static cable portion connected to each other, wherein in particular a connection between the dynamic cable portion and the static cable portion is located in the compensation portion of the underwater trajectory. In particular a portion of the electrical cable assembly that is close to the floating foundation in the intended state of use may comprise the dynamic cable portion and a portion of the electrical cable assembly that is remote from the floating foundation in the intended state of use may comprise the static cable portion.

This has the advantage that a relatively expensive dynamic type cable is only used in regions in that it is technically required (high load, significant movement) whereas in regions in that the loads on the electrical cable assembly are lower and/or less movement is to be compensated a relatively cheaper static type cable can be used.

The skilled person in the field of offshore electrical connections is aware of the differences between the two cable types. Herein, under an electrical cable of the dynamic type in particular an electrical cable is understood that is designed to withstand periodic movement and bending over long periods of time, for example for 25 years or more, without eventually breaking while under an electric cable of the static type in particular a cable is understood that is only bendable to a certain extend and can't be bent repeatedly without eventually breaking.

According to second aspect of the invention a method for operating a floating offshore structure according to the invention is proposed.

The method comprises the following steps:
a) generation of an activation signal,
b) activation of the cable release system to release the suspension of the electrical cable assembly from the floating foundation based on the activation signal.

According to a further embodiment the activation signal in step a) may be generated based on at least one operational parameter of the floating offshore structure, in particular of the electrical system, in particular the wind turbine, mounted on the floating foundation. Step a) may be in particular executed in a processing unit of the floating offshore structure that processes the at least one operational parameter based on predefined criteria to generate the activation signal.

Additionally or alternatively the method may comprise step a2) interruption of a power transmission through the electrical cable assembly, wherein step a2) is in particular executed before step b).

When step a) is executed in a processing unit of the floating offshore structure it may in particular comprise the following sub-steps:
a11) acquisition of a current value of at least one operational parameter of the floating offshore structure, in particular of the electrical system, in particular of the wind turbine, by the processing unit;
a12) comparing the current value of the at least one operational parameter with an allowed value range for the at least one operational parameter;
a13) if the current value of the at least one operational parameter exceeds the allowed value range, generation of the activation signal.

The operational parameter may include in particular a position information of the floating foundation and/or the electrical system, in particular the wind turbine. Additionally or alternatively the operational parameter may comprise an angle information of the floating foundation and/or the electrical system, in particular the wind turbine, in particular about an azimuth angle differential and/or an angle differential with respect to a pitch and/or roll angle. Additionally or alternatively the operational parameter may comprise an acceleration information of the floating foundation and/or the electrical system, in particular the wind turbine. Additionally or alternatively the operational parameter may comprise a load information of the mooring monitoring system.

According to a further embodiment the electrical system of the floating offshore structure may be a wind turbine, wherein the activation signal is generated in step a) by a wind turbine controller. More specifically, the wind turbine controller may represent the processing unit so that in particular above steps a11) to a13) may be executed in the wind turbine controller.

Any embodiment of the first aspect may be combined with any embodiment of the second aspect to obtain another embodiment of the first aspect and vice versa.

The respective entity, e.g. the processing unit, may be implemented in hardware and/or in software. If said entity is implemented in hardware, it may be embodied as a device, e.g. as a computer or as a processor or as a part of a system, e.g. a computer system. If said entity is implemented in software it may be embodied as a computer program product, as a function, as a routine, as a program code or as an executable object.

According to a further aspect, the invention relates to a computer program product comprising a program code for executing the above-described method for operating a floating offshore structure when run on at least one computer.

A computer program product, such as a computer program means, may be embodied as a memory card, USB stick, CD-ROM, DVD or as a file which may be downloaded from a server in a network. For example, such a file may be provided by transferring the file comprising the computer program product from a wireless communication network.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
Fig. 1 shows a schematic view of a first embodiment of a floating offshore structure according to the invention in a normal state of operation; and
Fig. 2 shows a schematic view of the floating offshore structure of Fig. 1 with a mooring system failure; and
Fig. 3 shows a schematic view of a second embodiment of a floating offshore structure according to the invention with a mooring system failure; and
Fig. 4 shows another schematic view of the second embodiment of a floating offshore structure according to the invention with a mooring system failure; and
Fig. 5 shows a schematic view of a third embodiment of a floating offshore structure according to the invention with a mooring system failure; and
Fig. 6 shows another schematic view of the third embodiment of a floating offshore structure according to the invention with a mooring system failure; and
Fig. 7 shows a detail of a floating offshore structure according to the invention in a normal state of operation; and
Fig. 8 shows a further detail of a floating offshore structure according to the invention in a normal state of operation; and
Fig. 9a-9c show schematic views of a cutting device of a cable release system of a floating offshore structure according to the second embodiment;
Fig. 10a-10c show schematic views of a different cutting device of a cable release system of a floating offshore structure according to the second embodiment;
Fig. 11 shows a flow chart of a first embodiment of the method according to the invention; and
Fig. 12 shows a flow chart of a second embodiment of the method according to the invention; and
Fig. 13 - Fig. 15 show further flow charts that represent exemplary embodiments for the generation of the activation signal in the method according to the invention.

In the Figures, like reference numerals designate like or functionally equivalent elements, unless otherwise indicated.

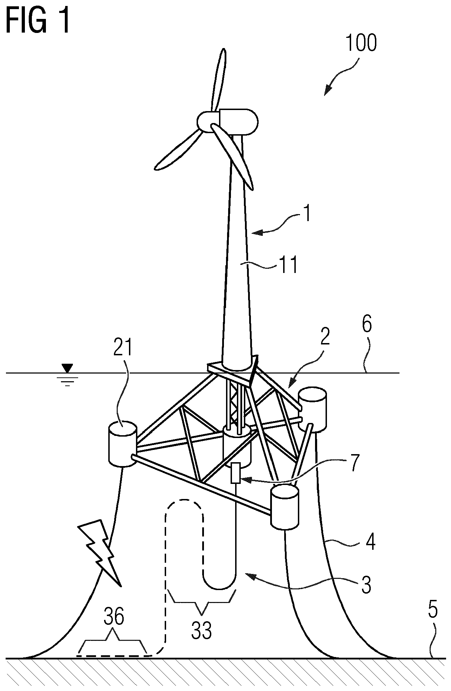

The floating offshore structure 100 shown in **Fig. 1** comprises a floating foundation 2 with at least one buoyancy body 21 that can in particular be of the tension leg platform (TLP) type. On the floating foundation 2 a tower 11 of a wind turbine 1 is mounted. The invention is however not limited to wind turbine applications but may be used for offshore structures comprising other electrical systems, for example electrical switchgear, electrical substations or drilling machinery, mounted on a floating foundation 2 as well.

The floating foundation 2 respectively the buoyancy body 21 floats on water and is at least partly submerged below the sea level 6.

The tower 11 of the wind turbine 1 is attached to the floating foundation 2 at a so called transition piece at the base of the tower 11. The wind turbine 1 is directly or indirectly electrically connected to an electrical cable assembly 3.

The electrical cable assembly 3 is suspended from the floating foundation 2 and follows an underwater trajectory towards the seabed 5.

Down at the seabed 5 the underwater trajectory comprises a support portion 36 in that it rests on the seabed 5 or may be buried in the seabed.

The electrical cable assembly 3 may comprise both power and communication lines that connect the wind turbine 1 - for example - to other wind turbines of a wind farm, an offshore substation or switchgear and/or an onshore station.

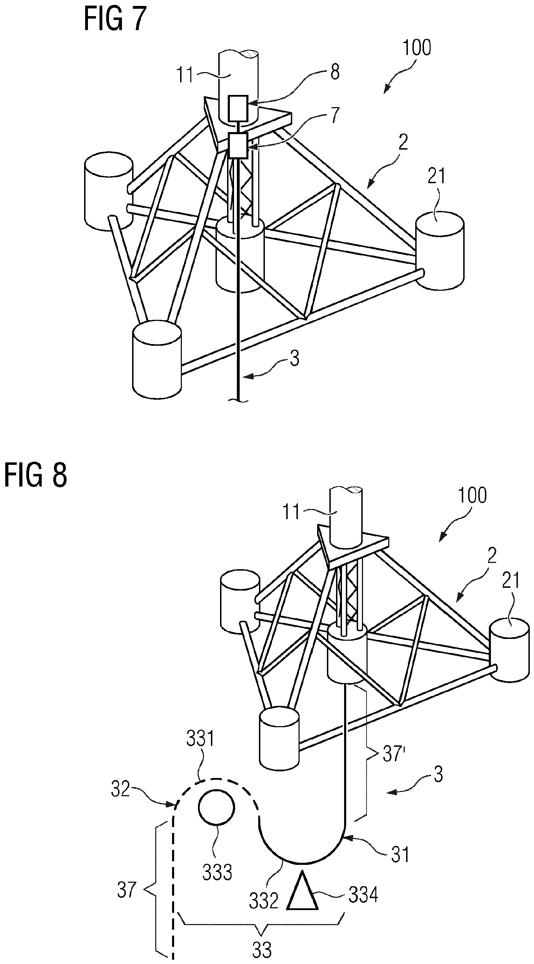

The underwater trajectory along that the electrical cable assembly 3 extends towards the seabed 5 comprises at least one riser portion extending with a vertical component or essentially vertical. In addition, the underwater trajectory comprises a compensation portion 33 that is adapted to provide an excess length of the electrical cable assembly 3 to allow the floating foundation sufficient freedom of movement and to facilitate repairs of the electrical cable assembly 3 after a failure. The compensation portion 33 and riser portion will be described in further detail below under Fig. 8.

The floating offshore structure 100 additionally comprises a mooring system with one or more mooring lines 4 that secure the floating foundation 2 to the seabed 5. At the seabed 5 the mooring lines 4 may be anchored with an anchor-type that the skilled person deems appropriate. The mooring system may optionally comprise a mooring monitoring system (MMS), that is adapted to gather information indicative for a condition of the mooring system, in particular of its mooring lines and/or anchors.

One of the mooring lines 4 is under tension and under risk of failing which is indicated by the lightning symbol in Fig. 1.

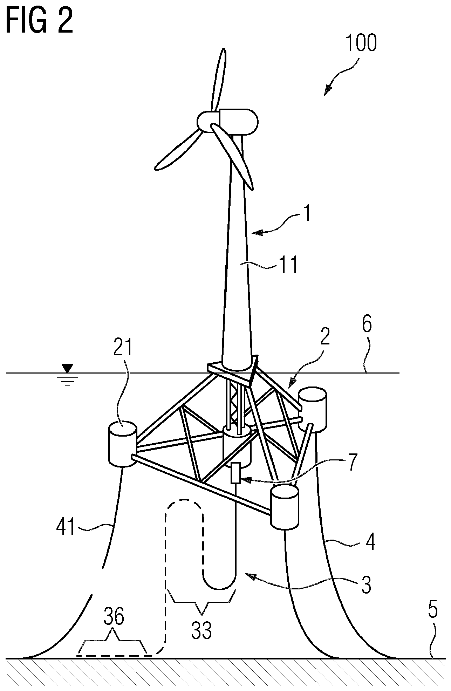

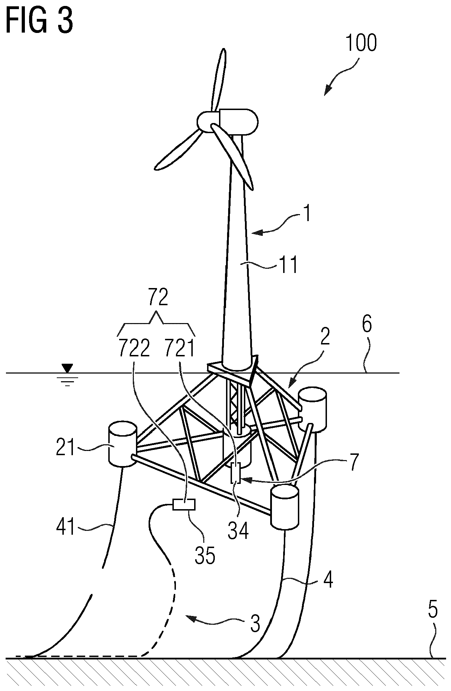

**Fig. 2** shows an operational state of the floating offshore structure 100 in that one mooring line 41 has failed, in particular snapped, so that the floating foundation 2 carrying the wind turbine 1 may drift away from its target position (see Fig. 3 to Fig. 6).

In order to avoid the electrical cable assembly 3 to rupture uncontrolledly after such a mooring system failure, the floating offshore structure 100 according to the invention is equipped with a cable release system 7 adapted to release the suspension of the electrical cable assembly 3 from the floating foundation 2 based on an activation signal.

According to the second embodiment shown in **Fig. 3** the cable release system 7 comprises an unplugging device 72 comprising a plug connection 721,722 adapted to be disconnected upon activation of the cable release system 7. The unplugging device 72 may comprise an activation means that separates the connection of the first plug 721 and second plug 722 based on the activation signal. The activation device may - for example - be operated electro-mechanically, hydraulically, pneumatically and/or pyrotechnically.

The two plugs 721,722 of the plug connection 721,722 are connected to each other in a normal state of operation of the unplugging device 72. The first plug 721 is attached to a foundation-side end 34 of electrical cable assembly 3 that is suspended from the floating foundation 2 and the second plug 722 is attached to a seabed-side end 35 of the electrical cable assembly 3 that extends towards the seabed 5. Upon activation of the cable release system 7 the two plugs 721,722 are separated, which is shown in Fig. 3.

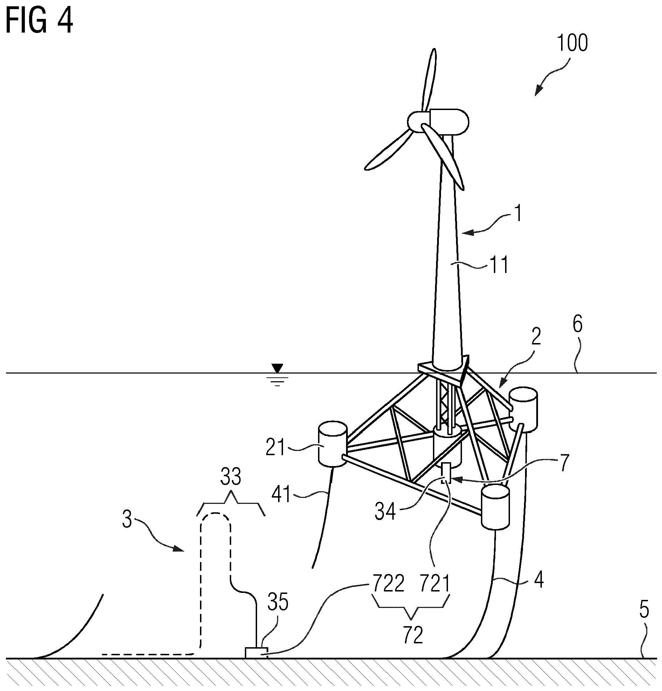

After the plug connection 721,722 has been disconnected the second plug 722 sinks towards the seabed 5 together with the seabed-side end 35 of the electrical cable assembly 3, which is shown in **Fig. 4****.**

As it can be seen in Fig. 4 the compensation portion 33 of the electrical cable assembly 3 does not fully sink to the seabed 5 but maintains a characteristic lying S-shape that is achieved by specific uplift and downforce generating means at the bends of the lying S-shape forming the compensation portion 33, which will be explained in more detail below under Fig. 8.

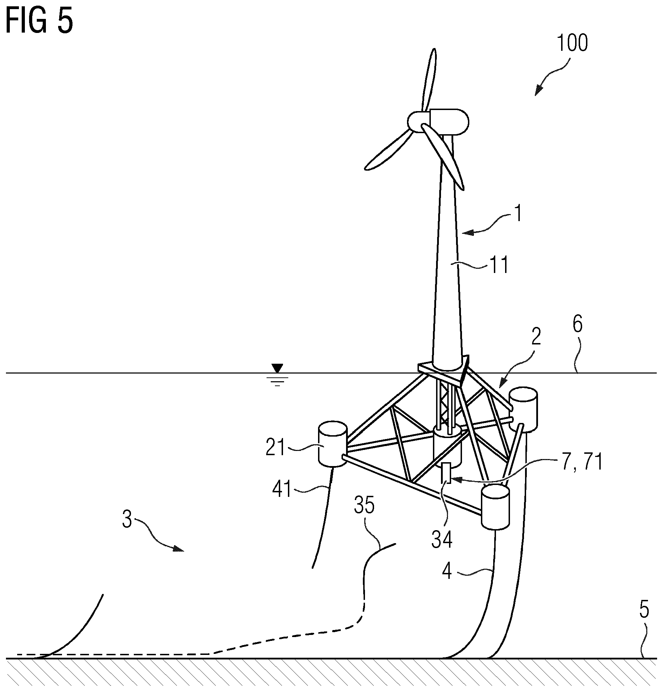

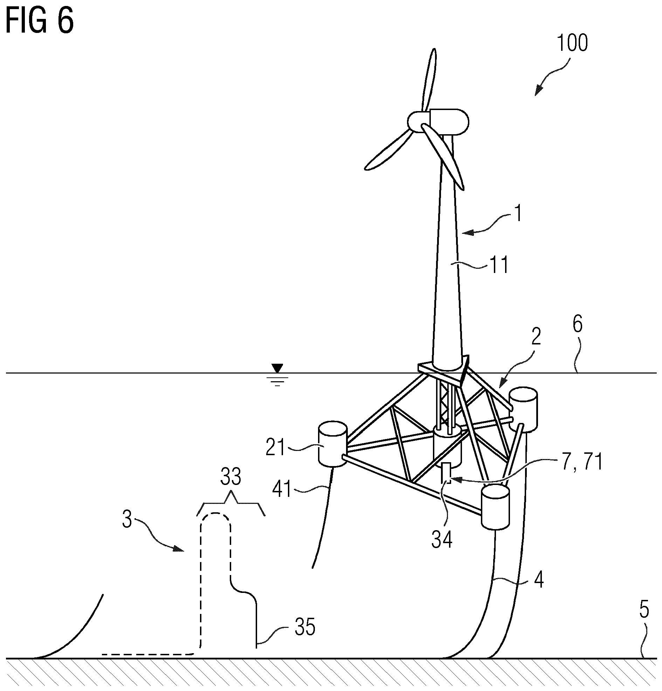

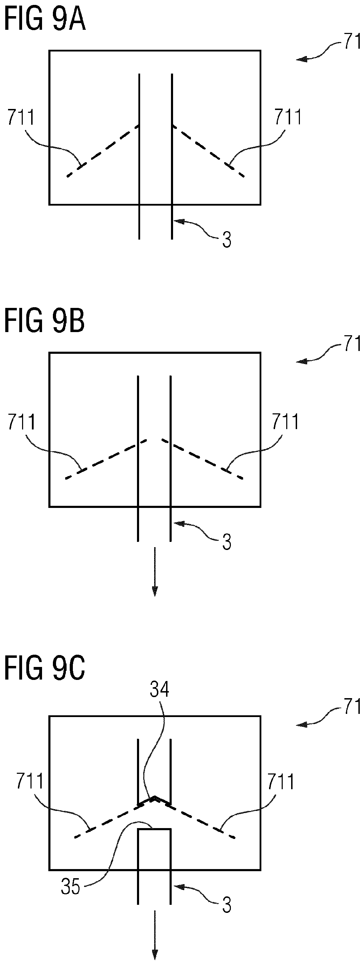

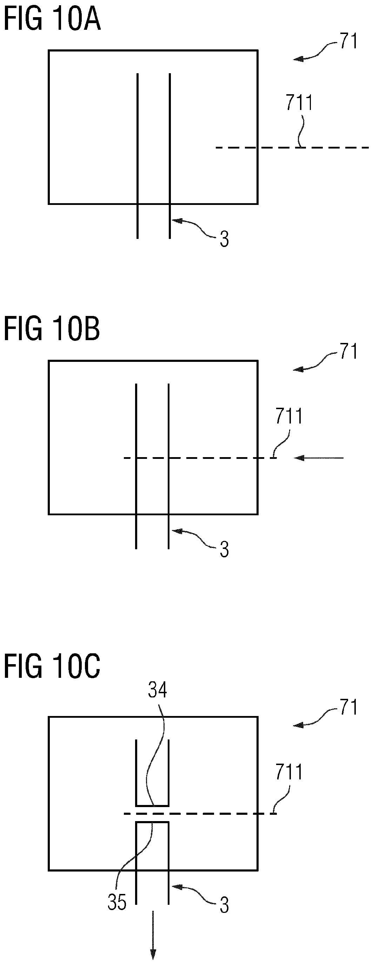

The third embodiment of the floating offshore structure 100 shown in **Fig. 5** and **Fig. 6** differs from the second embodiment in that the cable release system 7 comprises a cutting device 71 instead of an unplugging device 72 so that the release of the electrical cable assembly 3 is destructive. The cutting device 71 may in particular comprise at least one blade adapted to cut at least partly through a cross section of the electrical cable assembly 3 upon activation of the cable release system 7 and is further described below under Fig. 9 and Fig. 10. After the electrical cable assembly 3 has been separated by the cutting device 71 the seabed-side end 35 of the electrical cable assembly 3 (without a plug attached thereto) sinks towards the seabed 5. Apart from this, the function is identical to the second embodiment.

In the schematic detail view of **Fig. 7** the floating offshore structure 100 according to the invention is shown in a normal state of operation in the region of its floating foundation 2. The floating offshore structure 100 comprises an electrical switch gear unit 8 directly or indirectly fixed to the floating foundation 2 at the base of the wind turbine tower 11 that is electrically connected to the wind turbine (only tower 11 is shown in Fig. 7). The cable release system 7 is directly or indirectly fixed to the floating foundation 2, more specifically below the electrical switch gear unit 8 with respect to a direction of gravity in the intended state of use so that a connection of the electrical cable assembly 3 to the electrical switch gear unit 8 is not affected when the cable release system 7 is activated.

The underwater trajectory that the electrical cable assembly 3 follows towards the seabed 5, in particular its compensation portion 33, is described in more detail with reference to **Fig. 8****.** The underwater trajectory comprises a first riser portion 37 in that it extends with a vertical component or essentially vertically, for example to/from the seabed 5. The compensation portion 33 with a lying S-shape neighbors the first riser portion 37. The lying S-shape of the compensation portion 33 is formed by two bends 331,332 having different bending directions.

The first bend 331 is bent towards the seabed 5 and defines a local maximum of the underwater trajectory, wherein an uplift generating means 333 - for example a buoyancy body - is arranged at the first bend 331 so that the local maximum remains stable. The second bend 332 is bent away from the seabed 5 and defines a local minimum of the underwater trajectory, wherein a downforce generating means 334 - for example a weight - is arranged at the second bend 332 so that the local minimum remains stable.

Further, the underwater trajectory comprises a second riser portion 37' extending between the second bend 332 and a hang off of the electrical cable assembly 3 at the floating foundation 2.

In addition, Fig. 8 illustrates that the electrical cable assembly 3 comprises a dynamic cable portion 31 and a static cable portion 32 connected to each other, wherein the connection between the two cable portions 31,32 is located in the compensation portion 33 of the underwater trajectory. By providing the dynamic cable portion 31 in a section of the of the electrical cable assembly that is close to the floating foundation 2 it is possible to limit the use of the relatively expensive dynamic type cable to regions in that it is technically mandatory, e.g. due to high load and/or significant movement, wherein less loaded regions can be equipped with cheaper cables of the static type. This allows for a significant reduction of the overall installation and/or maintenance cost.

In **Fig 9a** to **Fig. 9c** a first exemplary embodiment of a cutting device 71 is shown in different operational states. The cutting device 71 receives or at least partially surrounds the electrical cable assembly 3 and comprises two blades 711 that are located at circumferentially opposing sides of the electrical cable assembly 3. In an idle state, which is shown in Fig. 9a, the blades 711 are spaced from the electrical cable assembly 3. Upon activation of the cable release system the blades 711 are moved with a radial component with respect to a longitudinal direction of the electrical cable assembly 3 and begin to cut through a cross section of the electrical cable assembly 3, which is shown in Fig. 9b. After moving the blades 711 further radially into the cross section of the electrical cable assembly 3 the full cross section is cut so that the electrical cable assembly 3 is separated having a foundation-side end 34 and a seabed-side end 35. Finally, the seabed-side end 35 will sink towards the seabed based on gravitation which is illustrated by the arrows in Fig. 9b and Fig. 9c. The blades may be moved by any drive system that the skilled person deems appropriate.

In **Fig 10a** to **Fig. 10c** a second exemplary embodiment of a cutting device 71 is shown in different operational states. In order to avoid redundancies, only the differences over the first exemplary embodiment will be discussed in the following. The cutting device 71 according to the second exemplary embodiment comprises a single blade 711 that is adapted to cut through the entire cross section of the electrical cable assembly 3 and - in other words - operates like a guillotine.

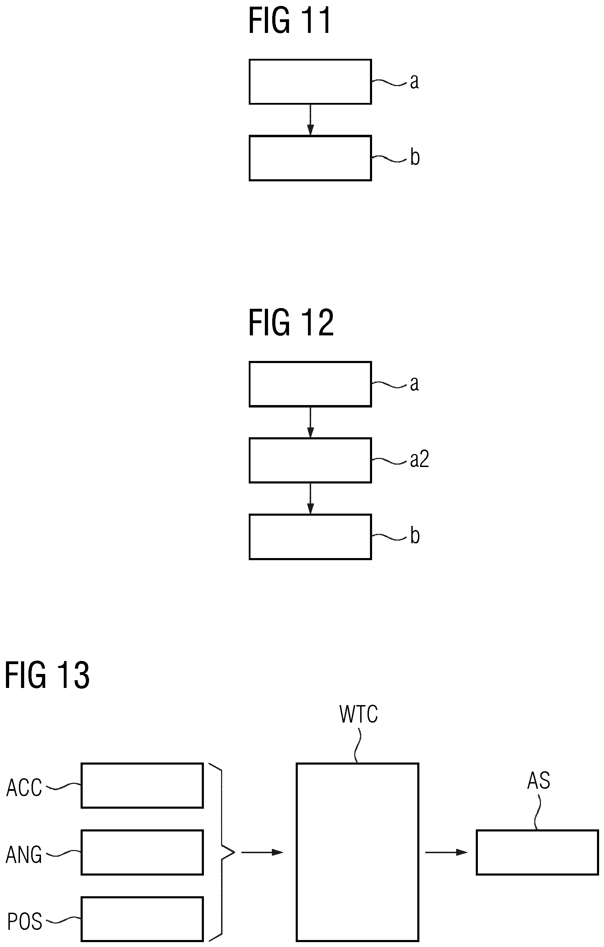

**Fig. 11** shows a flow chart of a first embodiment of the method for operating a floating offshore structure according to the invention.

The method comprises the steps of
a) generation of an activation signal AS, and
b) activation of the cable release system 7 to release the suspension of the electrical cable assembly 3 from the floating foundation 2 based on the activation signal AS.

**Fig. 12** shows a flow chart of a second embodiment of the method. According to the second embodiment the method may comprise step a2) interruption of a power transmission through the electrical cable assembly 3, that may be executed before step b).

The activation signal AS in step a) is in particular generated based on at least one operational parameter of the floating offshore 2 structure, in particular of the electrical system 1, in particular the wind turbine 1. Step a) is in particular executed in a processing unit of the floating offshore structure that processes the at least one operational parameter based on predefined criteria to generate the activation signal AS.

The processing unit may in particular be a wind turbine controller WTC.

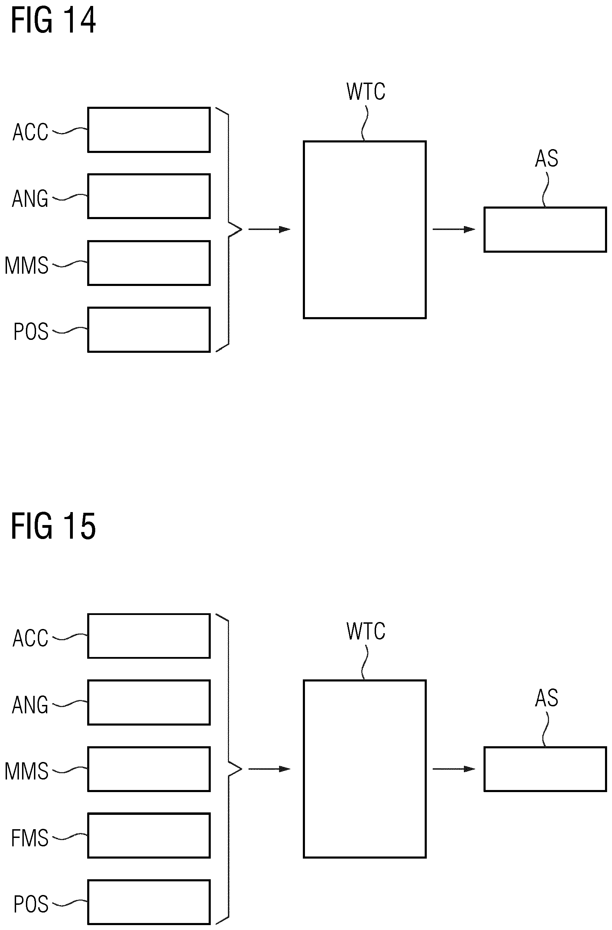

**Fig. 13** - **Fig. 15** show further flow charts that represent exemplary embodiments of how data can be processed to generate the activation signal in step a) of the method according to the invention.

The wind turbine controller WTC receives - as input - current values of one or more operational parameters of the floating offshore 2 structure, in particular of the electrical system 1, in particular the wind turbine 1 mounted on the floating foundation 2, which is illustrated in the left side column.

The wind turbine controller WTC processes the input according to predefined criteria to generate - as output - the activation signal AS, which is shown on the right side.

The input may include one or more operational parameters of the floating foundation 2 and/or the electrical system 1, in particular the wind turbine 1, mounted thereon, for example:
- a position information POS and/or
- an angle information ANG and/or
- an acceleration information ACC and/or
- a load information of the mooring monitoring system MMS.

Additional position/angle/acceleration information may be provided to the wind turbine controller WTC by a separate foundation monitoring system FMS.

Although the present invention has been described in accordance with preferred embodiments, it is obvious for the person skilled in the art that modifications are possible in all embodiments.

## Claims

1. Floating offshore structure (100), comprising a floating foundation (2) and at least one electrical system (1) mounted thereon, wherein the electrical system (1) is directly or indirectly electrically connected to an electrical cable assembly (3), that is suspended from the floating foundation (2) and, in an intended state of use, follows an underwater trajectory towards a seabed (5),
**characterized in that**
the floating offshore structure (100) comprises a cable release system (7) adapted to release the suspension of the electrical cable assembly (3) from the floating foundation (2) based on an activation signal (AS).

2. Floating offshore structure (100) according to claim 1, wherein the activation signal (AS) is generatable based on at least one operational parameter of the floating offshore structure (2), in particular of the electrical system (1) mounted on the floating foundation (2),
wherein in particular the floating offshore structure (100) comprises a processing unit that is adapted to process the at least one operational parameter based on predefined criteria and to generate the activation signal (AS).

3. Floating offshore structure (100) according to claim 1 or 2, comprising a mooring system with one or more mooring lines (4) that secure the floating foundation (2) to the seabed (5), wherein in particular the mooring system comprises a mooring monitoring system (MMS).

4. Floating offshore structure (100) according to any of the claims 1 - 3, wherein the electrical system (1) comprises a wind turbine (1), a switchgear and/or a substation.

5. Floating offshore structure (100) according to any of the claims 2 - 4,
wherein the operational parameter comprises:
- a position information (POS) of the floating foundation (2) and/or the electrical system (1), in particular the wind turbine (1), mounted thereon and/or
- an angle information (ANG) of the floating foundation (2) and/or the electrical system (1), in particular the wind turbine (1), mounted thereon, in particular about an azimuth angle differential and/or an angle differential with respect to a pitch and/or roll angle, and/or
- an acceleration information (ACC) of the floating foundation (2) and/or the electrical system (1), in particular the wind turbine, mounted thereon and/or
- a load information of the mooring monitoring system (MMS).

6. Floating offshore structure (100) according to any of the claims 1 - 5, wherein the cable release system (7) comprises a cutting device (71), in particular wherein the cutting device (71) comprises at least one blade (71) adapted to cut at least partly through a cross section of the electrical cable assembly (3) upon activation of the cable release system (7).

7. Floating offshore structure (100) according to any of the preceding claims, wherein the cable release system (7) comprises at least one unplugging device (72), in particular wherein the unplugging device (72) comprises a plug connection (721,722) adapted to be disconnected upon activation of the cable release system (7).

8. Floating offshore structure (100) according to any of the preceding claims, comprising at least one electrical switch gear unit (8) directly or indirectly fixed to the floating foundation (2) and electrically connected to the at least one electrical system (1), wherein the electrical cable assembly (3) is terminated at the electrical switch gear unit (8).

9. Floating offshore structure (100) according to any of the preceding claims, wherein the cable release system (7) is directly or indirectly fixed to the floating foundation (2), in particular below the electrical switch gear unit (8) with respect to a direction of gravity in the intended state of use.

10. Floating offshore structure (100) according to any of the preceding claims, wherein the underwater trajectory that the electrical cable assembly (3) follows comprises a compensation portion (33) with a lying S-shape with respect to the direction of gravity in the intended state of use.

11. Floating offshore structure (100) according to claim 10, wherein the lying S-shape of the compensation portion (33) comprises a first bend (331) and a second bend (332) neighboring each other, wherein the first bend (331) and the second bend (332) have a different bending direction, and wherein along the first bend (331) the electrical cable assembly (3) is subject to an uplift and along the second bend (332) the electrical cable assembly (3) is subject to a downforce.

12. Floating offshore structure (100) according to any of the preceding claims, wherein the electrical cable assembly (3) comprises a dynamic cable portion (31) and a static cable portion (32) connected to each other,
wherein in particular a connection between the dynamic cable portion (31) and the static cable portion (32) is located in the compensation portion (33) of the underwater trajectory, wherein in particular a portion of the electrical cable assembly (33) that is close to the floating foundation (2) in the intended state of use comprises the dynamic cable portion (31) and a portion of the electrical cable assembly (3) that is remote from the floating foundation (2) in the intended state of use comprises the static cable portion (32).

13. Method for operating a floating offshore structure (100) according to any of the preceding claims,
comprising the steps:
a) generation of an activation signal (AS),
b) activation of the cable release system (7) to release the suspension of the electrical cable assembly (3) from the floating foundation (2) based on the activation signal (AS).

14. Method according to claim 13,
- wherein the activation signal (AS) in step a) is generated based on at least one operational parameter of the floating offshore (2) structure, in particular of the electrical system (1), in particular the wind turbine (1), mounted on the floating foundation,
- wherein in particular step a) is executed in a processing unit of the floating offshore structure (100) that processes the at least one operational parameter based on predefined criteria to generate the activation signal (AS) and/or
- wherein the method comprises step a2) interruption of a power transmission through the electrical cable assembly (3), wherein step a2) is in particular executed before step b).

15. Method according to claim 13 or 14, wherein the electrical system (1) is a wind turbine (1) and wherein the activation signal (AS) is generated in step a) by a wind turbine controller (WTC).
